Europäisches Patentamt

European Patent Office

Office européen des brevets

(11) Numéro de publication : **0 322 282 B1**

(12) **FASCICULE DE BREVET EUROPEEN**

(45) Date de publication du fascicule du brevet :
**01.04.92 Bulletin 92/14**

(51) Int. Cl.⁵ : **G05D 1/06**

(21) Numéro de dépôt : **88403185.7**

(22) Date de dépôt : **14.12.88**

(54) **Système de référence de vitesse pour le pilotage d'un aéronef.**

(30) Priorité : **22.12.87 FR 8717932**

(43) Date de publication de la demande :
**28.06.89 Bulletin 89/26**

(45) Mention de la délivrance du brevet :
**01.04.92 Bulletin 92/14**

(84) Etats contractants désignés :
**DE GB NL**

(56) Documents cités :
**EP-A- 0 229 197**
**EP-A- 0 235 964**
**EP-A- 0 258 498**
**FR-A- 2 316 647**

(56) Documents cités :
**aviation week & space technology,22 septembre 86, new-york page 83 - 92; "airframe makers combating windshear withcommon training and devices"**

(73) Titulaire : **AEROSPATIALE Société Nationale Industrielle**
**37, Boulevard de Montmorency**
**F-75781 Paris Cédex 16 (FR)**

(72) Inventeur : **Bonafe, Jean Louis**
**33, Bld Deltour**
**F-31500 Toulouse (FR)**

(74) Mandataire : **Bonnetat, Christian et al**
**CABINET BONNETAT 23, Rue de Léningrad**
**F-75008 Paris (FR)**

Jouve, 18, rue Saint-Denis, 75001 PARIS

## Description

La présente invention concerne les systèmes de référence de vitesse pour le pilotage des aéronefs, ces systèmes étant parfois désignés par systèmes S R S.

On sait que les aéronefs, et notamment les avions civils gros porteurs, sont équipés de commandes automatiques du vol comportant un calculateur de commande de vol (calculateur FCC) qui regroupe le pilote automatique et le directeur de vol. Ces commandes automatiques du vol comportent entre autres un système de référence de vitesse, notamment actif en phase de décollage et de remise des gaz (go around) et délivrant des informations de pilotage au directeur de vol et/ou au pilote automatique.

On sait en outre que le directeur de vol comporte un horizon directeur de vol commandé par ledit système de référence de vitesse et qui a pour objet de visualiser les attitudes de l'aéronef ; à cet effet, ledit horizon directeur de vol comporte une maquette et une sphère mobile, la position de ladite maquette par rapport à ladite sphère mobile matérialisant les informations d'assiette réelle de l'aéronef, tandis que les informations du directeur de vol, fournies par le calculateur FCC, sont visualisées par des barres de tendance, dont une barre de tangage, qui indique la tendance de la commande longitudinale de l'aéronef. La position de cette barre de tangage par rapport à la maquette indique au pilote, soit un ordre à piquer, soit un ordre à cabrer, ou bien encore, si ladite barre de tangage est superposée à ladite maquette, que l'aéronef se trouve dans la configuration désirée. Ainsi, l'action du pilote (ou du pilote automatique) est d'agir sur la gouverne de profondeur, afin de superposer la barre de tangage à la maquette.

On conçoit aisément qu'en cas de panne d'un moteur, un tel système de référence de vitesse simplifie considérablement le travail du pilote, qui consiste alors à agir sur la gouverne de profondeur pour maintenir en superposition la barre de tangage et la maquette de l'horizon directeur de vol.

Aussi, les avions modernes sont-ils équipés d'un tel système de référence de vitesse. Par exemple, les avions bimoteurs AIRBUS A-310 et A-300-600 comportent un système de référence de vitesse constitué essentiellement d'un voteur (c'est-à-dire d'un comparateur à trois entrées à la sortie duquel apparaît celui des trois signaux d'entrée dont l'amplitude est comprise entre celles des deux autres), qui reçoit à ses entrées des signaux électriques respectivement représentatifs d'une première différence entre une vitesse désirée affichée par le pilote et la vitesse aérodynamique réelle de l'avion (corrigée de la pression dynamique), d'une seconde différence entre l'assiette longitudinale réelle et une assiette longitudinale de consigne (par exemple choisie égale à 18°), et d'une troisième différence entre la vitesse verticale baro-inertielle réelle et une vitesse verticale plancher (par exemple déterminée comme étant la vitesse minimale de montée avec un seul moteur à la pente de 2,4 %).

Un vote entre ces trois différences est effectué à chaque pas de calcul du calculateur FCC de commande de vol.

Comme on le verra plus en détail par la suite, lors d'un vote :

a) si les conditions de vol au décollage sont normales, c'est-à-dire si le rapport poussée/masse concernant l'avion est élevé, de sorte que l'aéronef augmente de façon continue son énergie cinétique et son énergie potentielle, la première différence est négative, alors que la troisième est positive, de sorte que la seconde différence est voisine de zéro. L'aéronef est alors commandé pour maintenir une assiette égale à l'assiette de consigne, avec une vitesse croissante supérieure à la vitesse désirée affichée par le pilote ;

b) si le rapport poussée/masse est faible, soit parce que la masse de l'aéronef est élevée, soit parce qu'un moteur est en panne, la première différence devient nulle, alors que la seconde devient négative et que la troisième reste positive, de sorte que c'est cette première différence, qui est transmise par le voteur. Dans ces conditions, l'action du pilote ou du pilote automatique est donc d'actionner la gouverne de profondeur de l'avion pour modifier l'assiette de celui-ci afin de maintenir la vitesse aérodynamique de l'aéronef égale à la vitesse désirée affichée par le pilote augmentée de 10 kts, l'assiette étant alors inférieure à l'assiette de consigne. Dans ce cas, l'énergie potentielle de l'aéronef augmente à énergie cinétique constante.

Un système de pilotage du type qui vient d'être succintement décrit ci-dessus est essentiellement conçu pour prendre en compte les cas de panne d'un moteur. Il va de soi, puisqu'il utilise des paramètres réels de l'avion (vitesse aérodynamique corrigée, assiette et vitesse verticale baro-inertielle) qui sont sensibles à l'environnement aérodynamique de celui-ci, que ce système de pilotage prend également en compte des perturbations de cet environnement. Toutefois, cette dernière prise en compte est accessoire et peut ne pas être assez fine pour un pilotage de survie dans le cas où l'avion rencontre une minitornade.

On sait que, par "minitornade", il faut entendre les perturbations météorologiques désignées communément en aéronautique par les mots anglo-saxons de "windshear", "downburst" ou "microburst".

De telles minitornades sont essentiellement constituées de violents courants d'air tourbillonnants et descendants, dont la vitesse peut être supérieure à 10 m/s et qui présentent d'importantes composantes de vitesse horizontales et verticales.

Bien que la probabilité pour qu'un aéronef rencontre une telle minitornade au cours de son décollage ou de son atterrissage soit faible, il n'en reste pas moins que le danger existe que le vol d'un aéronef soit fortement perturbé par une minitornade pendant ces phases de vol, au cours desquelles sa marge de sécurité est relativement sensible. C'est ainsi que l'on estime qu'au cours des vingt dernières années, les minitornades sont responsables d'une trentaine d'accidents ou d'incidents de décollage et d'atterrissage ayant entraîné plus de 600 morts.

En conséquence, l'objet de la présente invention est de perfectionner le système de référence de vitesse décrit ci-dessus pour le rendre encore plus sensible aux perturbations aérodynamiques éventuelles de l'environnement de l'aéronef, afin notamment de définir une stratégie de pilotage de survie en cas de minitornade.

A cette fin, selon l'invention, le système de référence de vitesse pour le pilotage d'un aéronef, délivrant au directeur de vol et/ou au pilote automatique des informations de pilotage en tangage, notamment pendant les phases de décollage et de remise des gaz, ledit système comportant un voteur recevant à ses entrées des signaux électriques respectivement représentatifs :

. d'une première différence entre une vitesse désirée affichée par le pilote et la vitesse aérodynamique réelle de l'aéronef ;

. d'une seconde différence entre l'assiette longitudinale réelle dudit aéronef et une assiette longitudinale de consigne ; et

. d'une troisième différence entre la vitesse verticale baro-inertielle réelle dudit aéronef et une vitesse verticale plancher,

est caractérisé en ce qu'il comporte :

– des premiers moyens de vote recevant à leurs entrées le signal de sortie dudit voteur et le signal représentatif de ladite troisième différence et délivrant à leur sortie celui de leurs deux signaux d'entrée qui est le plus petit ; et

– des seconds moyens de vote recevant à leurs entrées le signal de sortie desdits premiers moyens de vote et le signal représentatif d'une quatrième différence entre une vitesse aérodynamique plancher et ladite vitesse aérodynamique réelle, lesdits seconds moyens de vote délivrant à leur sortie celui de leurs deux signaux d'entrée qui est le plus grand.

Ainsi, comme on le verra ci-après :

– en conditions de vol normales, lesdits premiers et seconds moyens de vote n'interviennent pas et la sortie du système de référence de vitesse est celle dudit voteur. Par suite, l'aéronef sera commandé de la façon décrite ci-dessus, à propos du système connu, équipant les avions AIRBUS A-310 et A-300-600,

– s'il apparaît un gradient de vent horizontal arrière et/ou un gradient de vent vertical vers le bas dont l'amplitude est telle que les performances aérodynamiques de l'aéronef ne sont pas saturées, le système selon l'invention permet une modulation de la pente de montée, afin que la vitesse verticale par rapport au sol soit maximale pour une vitesse longitudinale maintenue constante.

– s'il apparaît un gradient de vent horizontal arrière et/ou un gradient de vent vertical vers le bas suffisamment fort pour saturer les performances aérodynamiques de l'aéronef :

. dans un premier temps, l'action desdits premiers moyens de vote prime sur l'action du voteur et desdits seconds moyens de vote. L'aéronef est piloté pour garder la vitesse verticale plancher au détriment de la vitesse longitudinale, de sorte qu'il maintient son altitude. Ainsi, on maintient l'énergie potentielle de l'avion par rapport au sol en perdant de l'énergie cinétique ;

. dans un deuxième temps, si la perturbation atmosphérique est très violente et de longue durée, l'action desdits seconds moyens de vote devient prépondérante pour maintenir une vitesse longitudinale plancher supérieure à la vitesse de décrochage. Dans ce cas, le système permet de maintenir l'énergie cinétique au détriment de l'énergie potentielle.

– le fonctionnement du système conforme à la présente invention (et donc la loi de pilotage qu'il définit) est indépendant des informations de poussée, de masse, ou de vent. Il s'adapte automatiquement aux performances réelles et instantanées de l'aéronef.

Avantageusement, lesdits premiers moyens de vote présentent une structure identique à celle dudit voteur, deux de leurs entrées recevant respectivement le signal de sortie dudit voteur et ladite troisième différence, tandis que sur leur troisième entrée est appliqué un premier signal de polarisation dont l'amplitude et/ou le signe sont choisis pour qu'il soit plus petit que la plus petite valeur susceptible d'être prise par ledit signal de sortie du voteur et par ladite troisième différence. De façon réciproque, il est avantageux que lesdits seconds moyens de vote présentent une structure identique à celle dudit voteur, deux de leurs entrées recevant respectivement le signal de sortie desdits premiers moyens de vote et ladite quatrième différence, tandis que sur leur troisième entrée est appliqué un second signal de polarisation dont l'amplitude et/ou le signe sont choisis pour qu'il soit plus grand que la plus grande valeur susceptible d'être prise par le signal de sortie desdits premiers moyens de vote et par ladite quatrième différence.

Afin d'éviter qu'à la disparition des perturbations atmosphériques, l'incidence de l'aéronef puisse prendre une valeur supérieure à l'incidence de décrochage, le système conforme à la présente invention comporte avantageusement des moyens de pilotage d'une assiette maximale. Si la demande est supérieure à cette assiette maximale, la demande maximale instantanée à cabrer est fonction de l'assiette initiale. Ce moyen de pilotage est réalisé par une limitation de l'ordre de commande en fonction de l'assiette de l'avion. Cette action peut être proportionnelle à ladite assiette.

Il est avantageux que, au-delà d'un seuil haut d'assiette à cabrer réelle de l'aéronef, par exemple égal à 21° en valeur absolue, lesdits moyens de limitation délivrent un ordre à piquer. Cet ordre à piquer vient alors diminuer l'assiette réelle à cabrer de l'aéronef, pour piloter l'assiette maximale de 21° par exemple. Ainsi, au-delà de l'assiette maximale, l'ordre à piquer ne pourra pas être inférieur à la limite qui est fonction de l'assiette instantanée et, en-deçà de l'assiette maximale, l'ordre à cabrer ne pourra pas être supérieur à la limite qui est fonction de l'assiette instantanée.

Lesdits moyens de limitation d'assiette peuvent également apporter une limite supérieure (par exemple égale à 24°) à la valeur de l'assiette à piquer réelle.

Avantageusement, afin d'éviter les conséquences d'une erreur d'affichage de vitesse par le pilote, le système conforme à la présente invention comporte un second voteur recevant à ses entrées respectivement un signal représentatif de ladite vitesse désirée affichée par le pilote et des signaux représentatifs respectivement d'une valeur de consigne maximale et d'une valeur de consigne minimale pour ladite vitesse désirée affichée, la sortie dudit second voteur étant reliée à un soustracteur recevant par ailleurs un signal représentatif de ladite vitesse aérodynamique réelle, la sortie dudit soustracteur étant reliée à l'entrée dudit voteur recevant ladite première différence.

La présente invention concerne également une utilisation du système de référence de vitesse décrit ci-dessus pour le pilotage en tangage d'un aéronef pendant les phases de décollage et de remise des gaz, cette utilisation étant caractérisée en ce que la sortie du système est reliée à un horizon directeur de vol et/ou à un pilote automatique, afin de commander la gouverne de profondeur dudit aéronef en accord avec te signal, éventuellement limité par lesdits moyens de limitation, délivré par ledit système de référence de vitesse.

Ainsi, grâce à la présente invention, on obtient un système de pilotage apte à réaliser et à conduire une stratégie de survie auto-adaptative grâce à la succession de trois votes, effectués respectivement par ledit voteur et par lesdits premiers et seconds moyens de vote. En conditions de vol normales, le vote dudit voteur est prépondérant et tout se passe comme si lesdits premiers et seconds moyens de vote étaient transparents. Ces derniers interviennent sélectivement en cas de perturbations, pour surmonter le vote dudit voteur. A la disparition de conditions atmosphériques difficiles, lesdits premiers et seconds moyens de vote redeviennent transparents pour le vote dudit voteur. De plus, grâce à l'action desdits moyens de limitation, l'avion est protégé contre le décrochage à la fin desdites perturbations atmosphériques.

On remarquera que le système selon l'invention est en outre indépendant de tout système d'alarme ayant pour objet d'attirer l'attention du pilote de l'aéronef sur la présence et/ou l'intensité d'une minitornade.

Les figures du dessin annexé feront bien comprendre comment l'invention peut être réalisée. Sur ces figures, des références identiques désignent des éléments semblables.

La figure 1 représente schématiquement une minitornade à différents stades de son évolution au voisinage du sol.

Les figures 2a, 2b et 2c illustrent schématiquement les composantes verticale et horizontale de la vitesse des courants d'air le long de la trajectoire d'un avion traversant une minitornade.

Les figures 3a, 3b et 3c montrent les diagrammes des vitesses concernant un avion avant et pendant la traversée d'une minitornade.

La figure 4 donne le schéma synoptique d'un mode de réalisation du système de référence de vitesse conforme à la présente invention.

La figure 5 est le schéma synoptique d'un système de pilotage comportant le système de référence de vitesse conforme à la présente invention.

La figure 6 montre le schéma synoptique d'un dispositif de limitation d'assiette permettant d'éviter le décrochage de l'avion à la fin de la minitornade.

La figure 7 est un diagramme illustrant le fonction nement du dispositif de limitation de la figure 6.

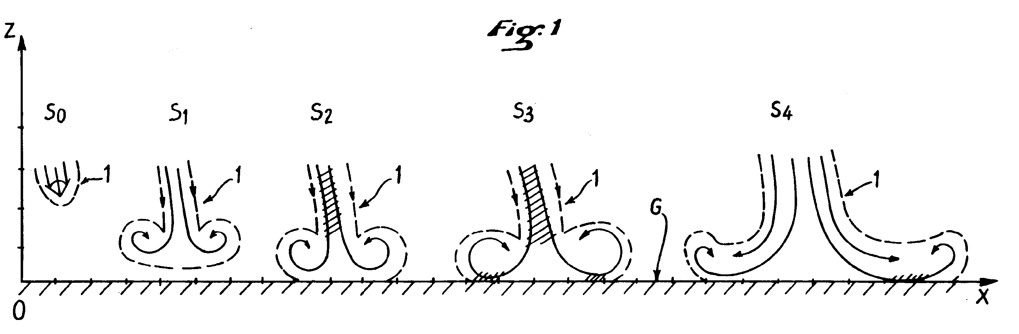

Sur la figure 1, on a représenté schématiquement, à cinq stades SO à S4 de son évolution, une minitornade 1, que le système de référence de vitesse selon l'invention est destiné à prendre en compte. Sur le schéma de la figure 1, les axes OX et OZ sont respectivement horizontal et vertical, l'axe OX étant au niveau du sol G. A des fins de clarté de dessin, les cinq stades de l'évolution de la minitornade 1 ont été représentés échelonnés le long de l'axe horizontal OX, mais il va de soi que cette disposition de dessin est arbitraire et pourrait être différente. En revanche, sur les axes OX et OY, on a indiqué des traits équidistants de 1 km, afin de donner l'échelle du phénomène. Une telle minitornade 1 est constituée de courants descendants, qui, après le stade initial de formation SO, divergent en tourbillonnant en direction du sol jusqu'à venir frapper celui-ci. Les parties hachurées de ces courants correspondent à des vitesses supérieures à 10 m/s. Si on désigne par T2 l'instant auquel se produit le stade S2, lorsque la minitornade 1 atteint le sol, les stades SO et S1 peuvent correspondre respectivement aux instants T2-5 mn et T2-2 mn, tandis que les stades S3 et S4 peuvent correspondre respectivement aux instants T2+5 mn et T2+10 mn.

On voit ainsi que, surtout aux stades S2 et S3, un avion traversant une minitornade 1 risque d'être mis en situation de perte de vitesse et/ou de perte d'altitude.

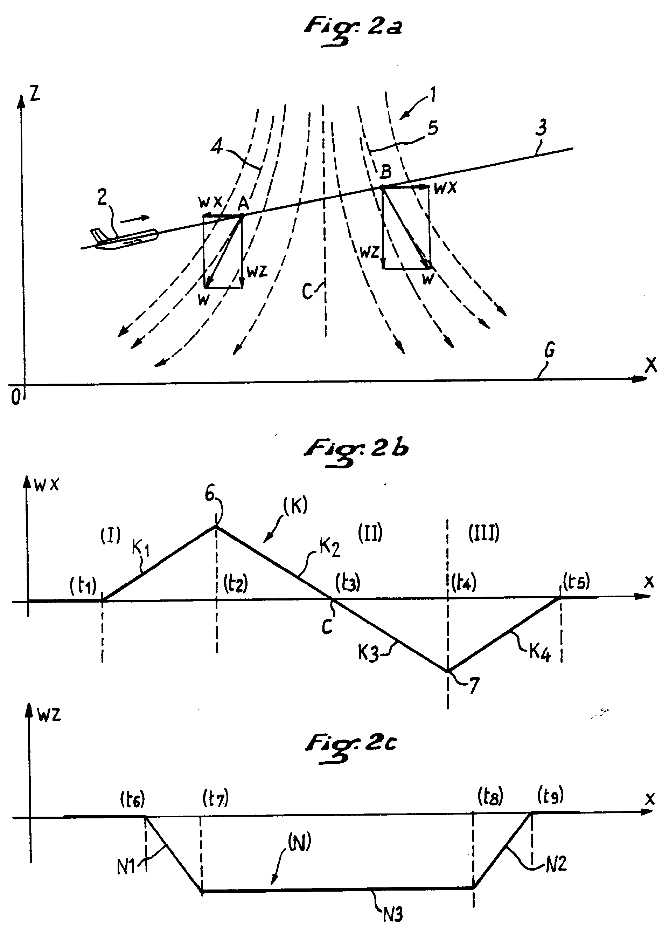

Les diagrammes des figures 2a, 2b et 2c permettent de mieux comprendre les effets d'une minitornade 1 sur un avion 2, dont la trajectoire 3 traverse cette dernière. Sur ces figures, il est supposé que l'avion 2 se déplace de la gauche vers la droite. En tout point A ou B de la minitornade 1, l'avion 2 est soumis par celle-ci à l'action de courants d'air 4, 5 ayant une vitesse W, dont la direction est tangente auxdits courants d'air 4 ou 5 passant par ce point A ou B, ladite vitesse W étant orientée vers le sol G, mais inclinée vers l'extérieur de ladite minitornade 1 par rapport audit sol. Cette inclinaison de la vitesse W vers l'extérieur de la minitornade 1 résulte de la structure divergente des courants d'air de celle-ci. Par suite, si la vitesse W est décomposée en une composante horizontale WX et en une composante verticale WZ, ces composantes sont constamment, et respectivement, dirigées vers l'extérieur de la minitornade et vers le sol.

Il en résulte donc que, lorsque l'avion 2 se déplace de l'extérieur de la minitornade vers le centre C de celle-ci, la composante horizontale WX se comporte en vent de face, alors que, lorsque l'avion 2 se déplace du centre C de la minitornade vers l'extérieur de celle-ci, cette composante horizontale WX se comporte en vent arrière. Bien entendu, dans le centre C de la minitornade, la composante WX s'annule pour permettre l'inversion de sens. De plus, entre la périphérie de la minitornade 1 et le centre C de celle-ci, l'amplitude de la composante horizontale WX est d'abord croissante et ensuite décroissante. Par suite, si l'on représente de façon extrêmement schématique l'évolution de la composante WX par rapport à l'avion 2, en considérant cette composante comme positive ou négative, respectivement lorsqu'elle correspond à un vent de face et à un vent arrière, on obtient une courbe telle que celle désignée par (K) sur la figure 2b.

Lorsque l'avion 2 pénètre dans la minitornade 1, (instant t1), la composante WX, qu'il reçoit de face, commence par croître (partie K1 de la courbe (K)), puis, à partir d'une certaine pénétration à l'intérieur de ladite tornade correspondant à un point 6 (instant t2), décroît bien que restant de face (partie K2 de la courbe (K)). Lorsque l'avion 2 atteint le voisinage du centre C de la minitornade 1 (instant t3), l'amplitude de la composante WX s'annule. Ensuite, l'avion se dirigeant depuis ce centre C vers l'extérieur de la minitornade 1, la composante WX qui a changé de signe pour devenir un vent arrière, prend une amplitude négative croissante (partie K3 de la courbe (K)). A partir d'une certaine approche de la périphérie de la minitornade 1 correspondant à un point 7 (instant t4), l'amplitude négative de la composante WX, qui se comporte toujours comme un vent arrière, décroît (partie K4 de la courbe (K)), jusqu'à devenir nulle à l'extérieur de la minitornade 1 (instant t5).

On voit ainsi que la traversée de la minitornade 1 par l'avion 2 peut être partagée en trois zones (voir la figure 2b), à savoir :

- une zone (I), correspondant à la partie K1 de la courbe (K), dans laquelle le vent de face croît, ce qui engendre un effet porteur ;
- une zone (II), correspondant aux parties K2 et K3 de la courbe (K), dans laquelle le vent de face décroît, puis devient un vent arrière croissant, ce qui, dans les deux cas, engendre un effet déporteur ; et
- une zone (III), correspondant à la partie K4 de la courbe (K), dans laquelle le vent arrière décroît, ce qui engendre un effet porteur.

Si, de façon analogue à ce qui a été fait ci-dessus schématiquement pour la composante horizontale WX de la vitesse W, on trace l'évolution schématique de la composante verticale WZ de cette vitesse le long de la trajectoire 3 de l'avion 2 dans la minitornade 1, on obtient la courbe (N) de la figure 2c. Cette courbe (N) se compose de deux parties d'extrémité N1 et N2, correspondant respectivement à l'accroissement et à la diminution de l'amplitude négative de WZ à la périphérie de la minitornade et d'une partie intermédiaire L3, qui correspond à la plus grande partie de la traversée de la minitornade et dans laquelle l'amplitude négative de WZ est sensiblement constante.

La partie de courbe N1, c'est-à-dire l'accroissement de l'amplitude négative de la composante WZ, commence à un instant t6, en retard par rapport à l'instant t1. De même, la partie de courbe N2, c'est-à-dire la diminution de l'amplitude négative de la composante WZ, se termine à un instant t9, antérieur à l'instant t5. On a désigné respectivement par t7 et t8, les instants auxquels se raccordent les parties N1 et N3, et les parties N3 et N2.

Pour des raisons de simplification et de schématisation, les parties K1 à K4 de la courbe (K) et les parties N1 à N3 de la courbe (N) ont été, sur les figures 2b et 2c, représentées sous la forme de segments de droite.

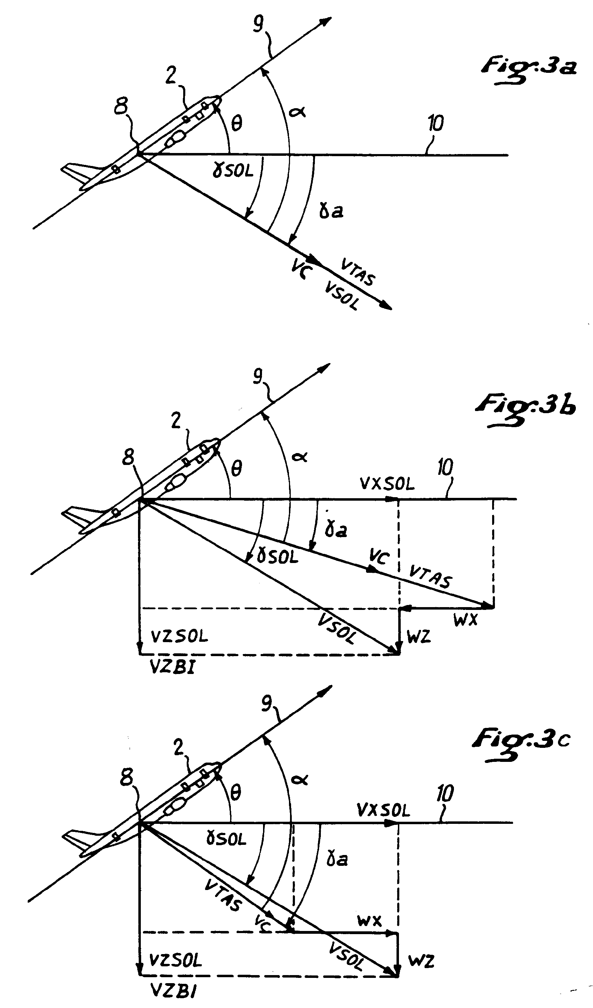

Sur la figure 3a, on a représenté le diagramme des vitesses, appliquées au centre de gravité 8 de l'avion 2 avant sa rencontre de la minitornade 1. Sur cette figure 3a, l'axe longitudinal 9 de l'avion 2 est incliné de l'assiette θ par rapport à la ligne d'horizon 10 (parallèle à l'axe OX) et présente l'incidence α par rapport à la vitesse aérodynamique VTAS, qui, elle-même est inclinée de la pente aérodynamique γa par rapport à la ligne d'horizon 10. Dans ce cas, la vitesse VSOL de l'avion 2 par rapport au sol G est confondue avec la vitesse aérodynamique VTAS. Sur la figure 3a, ainsi d'ailleurs que sur les figures 3b et 3c, on a représenté également la vitesse aérodynamique VC, dont la direction est évidemment confondue avec celle de la vitesse aérodynamique VTAS, mais dont l'amplitude est corrigée de la pression dynamique. Ci-après, la vitesse VC sera désignée par "vitesse aérodynamique corrigée".

Lorsque l'avion 2 reçoit un vent vertical et un vent horizontal, par exemple parce qu'il se trouve dans la minitornade 1, ces vents vertical et horizontal, ou composantes WX et WY, interviennent et doivent être composés avec VTAS et VSOL.

Si la configuration de l'avion 2 peut ne pas être modifiée, l'assiette θ reste constante, tandis que la vitesse VSOL et sa pente γ SOL par rapport à la ligne d'horizon 10 sont inchangées. Il en résulte que l'incidence aérodynamique α et la pente aérodynamique γa varient et que la vitesse aérodynamique VTAS varie différemment de VSOL.

Si, comme cela est représenté sur la figure 3b, la composante WX se comporte comme un vent de face, l'incidence aérodynamique α devient plus faible que dans le cas de la figure 3a. Cette figure 3b permet de plus de constater que si WX croît en amplitude, l'incidence aérodynamique α décroît et vice-versa.

Par suite, dans la zone (I) de la figure 2b, lorsque WX évolue selon la partie croissante K1 de la courbe (K) avec une dérivée dWX/dt positive, il en résulte une variation négative $\Delta\alpha$ de l'incidence α (effet porteur). En revanche, dans la zone (II) de la figure 2b, lorsque WX suit la partie de courbe décroissant K2 avec une dérivée dWX/dt négative, il s'ensuit une variation positive $\Delta\alpha$ de l'incidence α (effet déporteur).

De façon analogue à ce qui précède, si on compose les vitesses VSOL, WX, WZ et VTAS dans le cas où WX se comporte comme un vent arrière (voir la figure 3c), on constate que si WX croît en amplitude, l'incidence aérodynamique α croît et vice-versa.

Par suite, dans la zone (II) de la figure 2b, lorsque WX suit la partie de courbe décroissant K3 avec une dérivée dWX/dt négative, il en résulte une variation positive $\Delta\alpha$ de l'incidence α (effet déporteur). En revanche, lorsque WX suit la partie croissante K4 de la courbe (K), la dérivée dWX/dt est positive et la variation $\Delta\alpha$ de l'incidence α est négative (effet porteur).

Ainsi, dans tous les cas, on constate que lorsque dWX/dt est positive, $\Delta\alpha$ est négative et vice-versa.

De ce qui précède, et notamment de la comparaison des figures 3a, 3b et 3c, il ressort que la rencontre de l'avion 2 avec une minitornade 1 entraîne d'abord une diminution de l'incidence aérodynamique α dudit avion, suivie d'une augmentation importante de ladite incidence.

De plus, ces figures 3a à 3c montrent que WX est égale à la différence entre les projections sur l'axe horizontal (ou ligne d'horizon 10) de la vitesse aérodynamique VTAS et de la vitesse VSOL par rapport au sol et que, de même, WZ est égale à la différence entre les projections sur l'axe vertical OZ de la vitesse VSOL et de la vitesse aérodynamique VTAS. On a désigné par VXSOL et VZSOL, respectivement les projections de VSOL sur l'axe OX et sur l'axe OZ. On remarquera que la composante verticale VZSOL correspond à la vitesse baro-inertielle VZBI.

Des commentaires et schémas précédents, il ressort à l'évidence que au-delà d'une certaine amplitude, le vent arrière déporteur WX et/ou le vent vertical vers le bas WZ peuvent saturer les performances aérodynamiques de l'avion 1, au point de mettre l'avion en situation de perte de vitesse ou d'altitude.

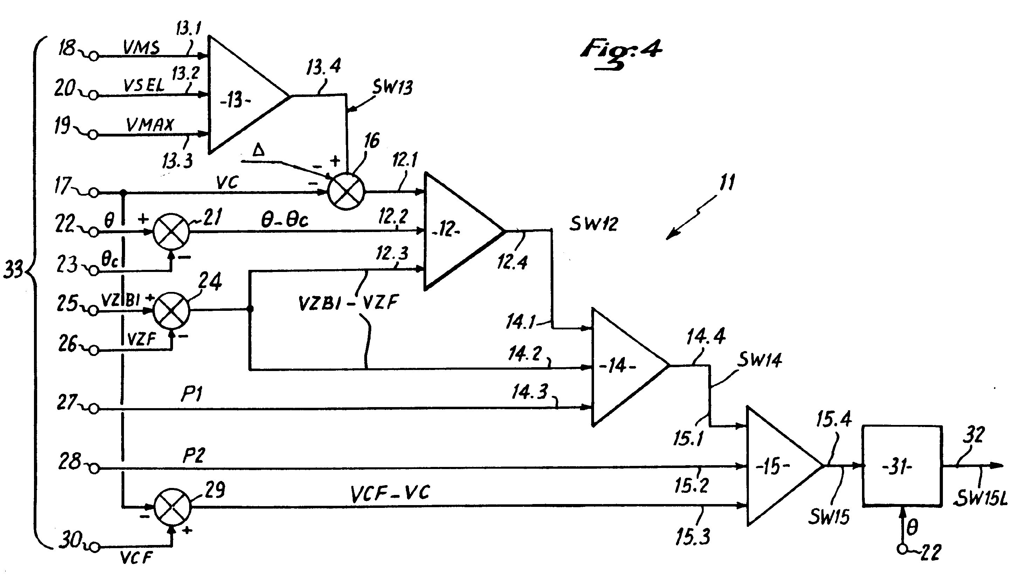

Le système de référence de vitesse 11 selon l'invention, dont le schéma synoptique simplifié est donné sur la figure 4, a pour objet de définir une stratégie de survie permettant de traverser au mieux une telle minitornade 1, même très violente.

Ce système 11 comporte quatre voteurs, portant respectivement les références 12, 13, 14 et 15, les trois entrées et la sortie de ces voteurs portant respectivement la référence du voteur correspondant associée respectivement aux chiffres 1, 2, 3 ou 4.

L'entrée 12.1 du voteur 12 est reliée à la sortie d'un soustracteur 16, dont une entrée négative reçoit d'une borne 17 un signal électrique délivré par le système anémométrique de bord (non représenté) et représentatif de la vitesse aérodynamique corrigée VC. Une autre entrée négative du soustracteur 16 reçoit un signal $\underline{\Delta}$ qui est représentatif d'une vitesse égale à 10 kts si l'avion est en condition normale et qui est égal à 0 si l'un des moteurs est en panne. L'entrée positive du soustracteur 16 est reliée à la sortie 13.4 du voteur 13, sur les trois entrées 13.1, 13.2 et 13.3 duquel apparaissent des signaux électriques, respectivement représentatifs d'une vitesse minimale sélectable VMS (égale par exemple à 1,3 VS pour l'atterrissage et 1,2 VS pour le décollage, VS étant la vitesse du décrochage de l'avion 2), d'une vitesse VSEL sélectée et d'une vitesse maximale sélectable VMAX, fonction de l'hypersustentation de l'avion.

Les signaux représentatifs de la vitesse minimale sélectable VMS et de la vitesse maximale sélectable VMAX proviennent du calculateur de bord et sont délivrés sur des bornes respectives 18 et 19, respectivement reliées auxdites entrées 13.1 et 13.3 du voteur 13. Le signal représentatif de la vitesse sélectée VSEL est délivré par un organe de sélection (non représenté) à la disposition du pilote de l'avion et appliqué à une borne 20, reliée à l'entrée 13.2 du voteur 13.

Le voteur 13 a pour objet d'éliminer toute erreur d'affichage ou de transmission d'affichage de vitesse. En effet, si la vitesse VSEL affichée par le pilote est comprise entre VMS et VMAX, c'est elle qui constitue le signal de sortie SW13, apparaissant à la sortie 13.4 du voteur 13. En revanche, si par erreur la vitesse VSEL affichée par le pilote est inférieure à VMS ou supérieure à VMAX, le signal SW13 représente, respectivement, VMS ou VMAX.

Par ailleurs, la commande des moteurs de l'avion 2 est telle que la pente de montée avec un moteur en panne soit supérieure à 2,4 %, ce qui garantit que la vitesse aérodynamique corrigée réelle VC de celui-ci soit toujours supérieure (par exemple de 10 kts) à la vitesse VSEL affichée par le pilote. Il en résulte que pour des conditions de vol normales, la différence SW13-VC est toujours négative.

L'entrée 12.2 du voteur 12 est reliée à la sortie d'un soustracteur 21, dont l'entrée positive reçoit d'une borne 22 un signal électrique délivré par la centrale inertielle de bord (non représentée) et représentatif de l'assiette longitudinale θ de l'avion 2. L'entrée négative du soustracteur 21 est reliée à une borne 23, sur laquelle est appliquée (par une source non représentée) un signal électrique représentatif d'une assiette longitudinale de consigne θc, par exemple égale à 18°.

L'entrée 12.3 du voteur 12 est reliée à la sortie d'un soustracteur 24, dont l'entrée positive est reliée à une borne 25, sur laquelle est appliqué un signal électrique délivré par la centrale inertielle de bord (non représentée) et représentatif de la vitesse verticale baro-inertielle VZBI. L'entrée négative du soustracteur 24 est reliée à une borne 26, sur laquelle est appliquée (par une source non représentée), un signal électrique représentatif d'une vitesse verticale plancher VZF, correspondant par exemple à une montée de l'avion bimoteur 2, avec un seul moteur selon une pente de 2,4 %.

Ainsi, à ses entrées 12.1, 12.2 et 12.3, le voteur 12 reçoit respectivement les signaux SW13-VC, θ - θc et VZBI-VZF, de sorte que, suivant les valeurs respectives desdits signaux, le signal SW12 apparaissant sur la sortie 12.4 dudit voteur 12 est formé, à chaque instant, par celui de ces trois signaux dont l'amplitude est comprise entre celles des deux autres. Comme on le verra par la suite, le voteur 12 permet une autoadaptation de la commande aux performances de l'avion 2.

Les trois entrées 14.1, 14.2 et 14.3 du voteur 14 sont respectivement reliées à la sortie 12.4 du voteur 12, à la sortie du soustracteur 24 et à une borne 27, sur laquelle est appliqué, par une source non représentée, un signal de polarisation P1. Ainsi, lesdites entrées 14.1, 14.2 et 14.3 reçoivent respectivement le signal de sortie SW12 du voteur 12, le signal VZBI-VZF et le signal de polarisation P1. Ce signal de polarisation P1 est choisi très petit (par exemple négatif) de façon que le signal de sortie SW14 apparaissant à la sortie 14.4 du voteur 14 soit constitué par celui des deux signaux SW12 et VZBI-VZF qui est le plus petit.

Les trois entrées 15.1, 15.2 et 15.3 du voteur 15 sont respectivement reliées à la sortie 14.4 du voteur 14, à une borne 28 sur laquelle est appliqué (par une source non représentée) un signal de polarisation P2 et à la sortie d'un soustracteur 29. L'entrée positive du soustracteur 29 est reliée à une borne 30 sur laquelle est appliqué (par une source non représentée) un signal de vitesse longitudinale plancher VCF. Ce signal VCF est par exemple choisi égal à 1,1 VS, VS étant la vitesse de décrochage de l'avion 2. Par ailleurs, l'entrée négative du soustracteur 29 est reliée à la borne 17, sur laquelle apparaît le signal VC de vitesse aérodynamique corrigée. Ainsi, les trois entrées 15.1, 15.2 et 15.3 du voteur 15 reçoivent respectivement le signal de sortie SW14 du voteur 14, le signal de polarisation P2 et le signal VCF-VC. Le signal de polarisation PS est choisi très grand de façon que le signal de sortie SW15 apparaissant à la sortie 15.4 du voteur 15 soit constitué par celui des deux signaux SW14 et VCF-VC qui est le plus grand.

De plus, la sortie 15.4 du voteur 15 est reliée à l'entrée d'un dispositif de limitation 31, qui sera décrit plus en détail par la suite.

La sortie du système de référence de vitesse 11 est formée par la sortie 32 du dispositif de limitation 31.

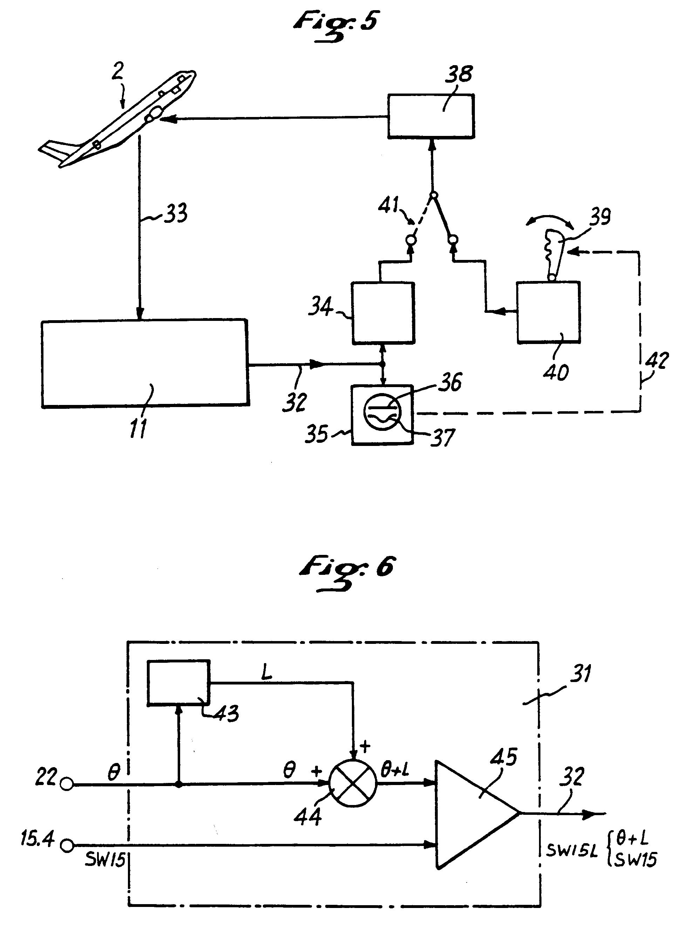

Sur la figure 5, on a représenté schématiquement un système de pilotage incluant le système de référence de vitesse 11 conforme à l'invention. Bien entendu, quoique pour des raisons de clarté de dessins on ait représenté ce système de pilotage à l'extérieur de l'avion 2, il va de soi qu'il se trouve à bord de ce dernier.

Sur cette figure 5, on a désigné par la référence commune 33, les différentes liaisons entre le système de référence de vitesse 11 et les autres appareils de bord (centrale inertielle, dispositifs d'affichage, système anémométrique, etc...) adressant des signaux sur les bornes 17-20, 22, 23, 25-28 et 30. La sortie 32 du dispositif 11 est reliée, en commun, au pilote automatique 34 et au directeur de vol 35. Ce dernier comporte, de façon connue, une barre de tendance de tangage 36 et une maquette 37. L'avion 2 est commandé en assiette par la gouverne de profondeur 38, qui peut être actionnée, soit par le pilote automatique 34, soit par le manche 39 associé à un transmetteur 40. Un commutateur 41 permet le choix entre la commande par le pilote automatique 34 et par l'ensemble manche 39-transmetteur 40. Le manche 39 est à la disposition du pilote, qui regarde le directeur de vol 35. Ainsi, la liaison 42 entre le directeur de vol 35 et le manche 39 est réalisée par l'intermédiaire du pilote de l'avion.

Les fonctionnements du système de référence de vitesse 11 de la figure 4 et du système de pilotage de la figure 5 sont décrits ci-après, dans plusieurs situations différentes, en faisant abstraction de l'action du dispositif de limitation 31.

**I - L'avion 2 ne rencontre pas de minitornade et son rapport poussée/masse est grand.**

Cette situation correspond à des conditions de vol normales, pour lesquelles il n'y a pas de perturbations aérodynamiques, alors que la masse de l'avion 2 est faible ou normale et que les moteurs sont susceptibles de fournir la poussée maximale.

Par suite, dans ce cas, comme il a été mentionné ci-dessus, la vitesse aérodynamique corrigée VC est supérieure au signal de vitesse SW13, de sorte que SW13-VC est négatif. De plus, la vitesse baro-inertielle verticale VZBI est supérieure à la vitesse verticale plancher VZF, de sorte que VZBI-VZF est positif. De même la vitesse aérodynamique corrigée VC est supérieure à la vitesse longitudinale plancher VCF, de sorte que VCF-VC est négatif.

L'avion 2 peut alors être commandé de façon que son assiette θ soit maintenue à la valeur de consigne θc, par exemple égale à 18°. La différence θ - θc est donc faible et comprise entre SW13-VC (négatif) et VZBI-VZF (positif).

Le signal SW12 est alors formé par le signal θ - θ c.

Dans le voteur 14, le petit signal SW12 = θ - θc est de nouveau comparé au signal positif VZBI-VZF et, comme le signal de polarisation P1 est choisi négatif (voir ci-dessus), c'est de nouveau le signal θ - θ c qui est transmis par le voteur 14. Le signal SW14 est donc aussi égal à θ - θ c.

Dans le voteur 15, le petit signal SW14 = θ - θ c est comparé au signal négatif VCF-VC et au très grand signal de polarisation P2, de sorte que c'est lui qui est transmis par ledit voteur. Le signal SW15 est donc égal à θ - θc.

On voit que, dans ces conditions, le signal θ - θc apparaissant à la sortie du voteur 12 est transmis sans altération par les voteurs 14 et 15.

C'est donc le signal SW15 = θ - θ c qui apparaît sur la sortie 32 et qui est appliqué au pilote automatique 34 et à l'horizon directeur de vol 35. Dans ce dernier, l'écart séparant la barre de tendance de tangage 36 de la maquette 37 est donc représentatif de θ - θ c.

Si le commutateur 41 se trouve dans la position représentée en trait plein sur la figure 5, le pilote agit sur la gouverne de profondeur 38 par l'intermédiaire d'un manche 39 pour amener la barre de tendance de tangage 36 en superposition à la maquette 37. Par suite, l'assiette réelle θ de l'avion 2 prendra la valeur de consigne θ c.

Si le commutateur 41 se trouve dans la position représentée en tirets sur la figure 5, le pilote automatique 34 agira directement sur la gouverne de profondeur 38 pour obtenir un résultat analogue.

On voit donc que, pour des conditions de vol normales, les systèmes des figures 4 et 5 permettent d'asservir l'assiette θ de l'avion 2 à la valeur de consigne θ c = 18°.

**II - L'avion 2 ne rencontre pas de minitornade, mais son rapport poussée/masse est faible.**

Cette situation correspond à des conditions de vol, pour lesquelles il n'y a pas de perturbations aérodynamiques, alors que, soit la masse de l'avion est normale avec une panne de moteur, soit le fonctionnement des moteurs est normal avec une masse élevée.

Dans ce cas, les moteurs ne pourraient plus assurer une vitesse aérodynamique corrigée VC supérieure au signal de vitesse SW13, si l'assiette θ était maintenue à la valeur de consigne θ c ; par suite, θ - θ c devient négatif, SW13 - VC devient faible. En revanche, VZBI-VZF et VCF-VC restent positifs.

Il en résulte que le signal SW12 à la sortie du voteur 12 est constitué par le signal SW13-VC.

De même, puisque le voteur 14 laisse passer le plus petit signal qui se présente à ses entrées 14.1 et 14.2, le signal SW14 est égal à SW13-VC.

De plus, puisque le voteur 15 laisse passer le plus grand signal qui se présente à ses entrées 15.1 et 15.3, le signal SW15 est formé par le signal SW14 et est donc égal à SW13-VC.

Là encore, on voit que le signal SW13-VC apparaissant à la sortie du voteur 12 est transmis sans altération par les voteurs 14 et 15.

Dans ces conditions, le signal SW15 apparaissant à la sortie 32 est égal à SW13-VC, de sorte que l'écart entre la barre de tendance de tangage 36 et la maquette 37 est représentatif de la différence entre la vitesse affichée SW13 et la vitesse aérodynamique corrigée VC. En effet, lorsque le pilote automatique 34 ou le pilote de l'aéronef aura agi pour amener la barre de tangage 36 en coïncidence avec la maquette 37, il aura modifié l'assiette θ dudit aéronef d'une valeur Δθ telle que, au moment de la coïncidence, la vitesse aérodynamique corrigée VC sera égale à la valeur affichée SW13. En d'autres termes, l'ensemble 34-41-38 et l'ensemble 35-42-39-40-41-38 transforment tout signal apparaissant sur la sortie 32 en un équivalent de signal d'assiette, qu'il tend à annuler. Par suite, de façon semblable à ce qui a été décrit ci-dessus, la vitesse aérodynamique corrigée de l'avion 2 est asservie, par modification de l'assiette de l'avion 2, à cette vitesse affichée, par la mise en action soit du pilote automatique 34, soit de l'horizon directeur de vol 35 et du manche 39, en fonction de la position du commutateur 41.

Eventuellement, dans de telles conditions, il peut se faire que VZBI-VZF devienne transitoirement très faible, et même plus faible de SW13-VC, de sorte que c'est alors le signal VZBI-VZF qui formerait le signal SW15. Le pilotage de l'avion 2 serait alors tel que sa vitesse verticale serait asservie à la vitesse verticale plancher.

III - L'avion 2 est soumis à l'action d'un gradient de vent arrière WX saturant les performances de l'avion.

a) Tout d'abord, l'assiette $\theta$ ne peut plus être maintenue à la valeur de consigne $\theta$ c et diminue, de sorte que $\theta$ - $\theta$c devient négatif. De plus, la vitesse VC diminue également, tout en restant supérieure à SW13, c'est-à-dire SW13-VC se rapproche de zéro en restant positive. Enfin, VZBI-VZF reste positive.

Le signal SW12 à la sortie du voteur 12 est donc le signal SW13-VC. On constatera aisément, à l'aide des explications ci-dessus, que les signaux SW14 et SW15 sont également constitués par le signal SW13-VC.

Par suite, la gouverne de profondeur 38 est actionnée (par le pilote automatique 34 ou par le pilote suivant les indications de l'horizon directeur de vol 35) de façon que l'avion 2 pique ($\theta$ décroît) pour maintenir sa vitesse aérodynamique corrigée VC à la valeur SW13 affichée. Concomitamment, la valeur de VZBI diminue.

b) Le vent arrière WX persistant, la valeur de VZBI se rapproche à celle de VZF, de sorte que VZBI-VZF devient voisine de zéro, alors que $\theta$ - $\theta$c reste négative et que SW13-VC reste positive.

Le signal SW12 à la sortie du voteur 12 est donc le signal VZBI-VZF. On vérifiera facilement que les signaux SW14 et SW15 sont également formés par VZBI-VZF.

Ainsi, maintenant, l'avion 2 est commandé pour maintenir sa vitesse verticale VZBI à la valeur plancher VZF. Il en résulte un ordre à cabrer (augmentation de $\theta$) et une diminution de VC, qui devient inférieure à VCF.

c) Dans l'hypothèse où le vent arrière persiste toujours, il n'est plus possible de maintenir VZBI=VZF et VZBI-VZF passe par séro. Il en est de même de $\theta$ - $\theta$c, malgré l'augmentation mentionnée sous b). Enfin, SW13-VC reste positive. Par suite, les signaux SW12 et SW14 restent formés par VZBI-VZF. Cependant, le voteur 15, qui compare alors le faible signal VZBI-VZF (qui devient même négatif) au faible signal positif VCF-VC et au grand signal de polarisation P2, vote le signal VCF-VC.

Par suite, l'avion 2 est piloté pour que VC soit maintenue à la valeur plancher VCF, VZBI étant négatif et $\theta$ décroissant.

IV - L'avion 2 est soumis à l'action d'un vent vertical vers le bas WZ saturant les performances de l'avion.

a) Quelle que soit la situation initiale (maintien $\theta$ = 18° ou VC = VSEL + 10 kts) du voteur 12, l'apparition d'un vent vertical saturant la performance de l'avion va mettre celui-ci en situation de descente, c'est-à-dire que VZBI est inférieure à VZF. Ainsi, les commandes du voteur 12 et du voteur 14 imposent une commande issue du signal VZBI-VZF.

L'avion 2 est donc piloté par le système de la figure 5, de façon que VZBI soit asservi à VZF. Il en résulte un accroissement de l'assiette $\theta$.

b) Le vent vertical vers le bas WZ persistant et $\theta$ croissant au delà de 18°, le maintien de l'avion à altitude constante se traduit par un échange entre l'énergie cinétique et l'énergie potentielle, de sorte que VC diminue.

On se trouve ainsi avec VSEL-VC positif (voie 12.1), $\theta$ - $\theta$c positif (voie 12.2) et VZBI-VZF égale à 0 (voie 12.3). Alors, le voteur 12 privilégie la voie 12.1 ou la voie 12.2 et demande naturellement de piquer. Le voteur 14 imposera alors sa propre demande VZBI-VZF = 0 et maintiendra la vitesse verticale minimale VZF.

Si la perturbation WZ persiste, la vitesse VC continue à diminuer et atteint la vitesse plancher VCF ; le voteur 15 surpassera alors les voteurs 14 et 12 pour imposer que l'avion 2 soit commandé de façon que sa vitesse aérodynamique corrigée VF soit maintenue à la valeur plancher VCF par diminution de l'assiette $\theta$.

Bien entendu, les conditions réelles instantanées de vol sont des combinaisons des cas simples donnés ci-dessus à titre d'exemple, pour illustrer le fonctionnement des systèmes des figures 4 et 5.

En présence d'un vent vertical vers le bas WZ important, l'assiette $\theta$ peut prendre une valeur à cabrer élevée pour maintenir la vitesse verticale VZBI à la valeur plancher VZF. Toutefois, à ce moment, l'incidence $\alpha$ de l'avion 2 peut avoir une valeur proche de la valeur de l'incidence à laquelle intervient le vibreur de manche. Pour éviter tout risque d'accident en cas de disparition brusque du vent vertical WZ, le dispositif 31 a pour objet de limiter l'assiette commandée SW15 en fonction de l'assiette réelle $\theta$ de l'avion 2 à une valeur inférieure à l'incidence de décrochage. Pour cela, le dispositif 31 reçoit, en plus du signal SW15, l'information d'assiette réelle $\theta$ disponible sur la borne 22 et délivre sur la sortie 32 un signal d'assiette limitée SW15L, qui est adressé au pilote automatique 34 et à l'horizon directeur de vol 35.

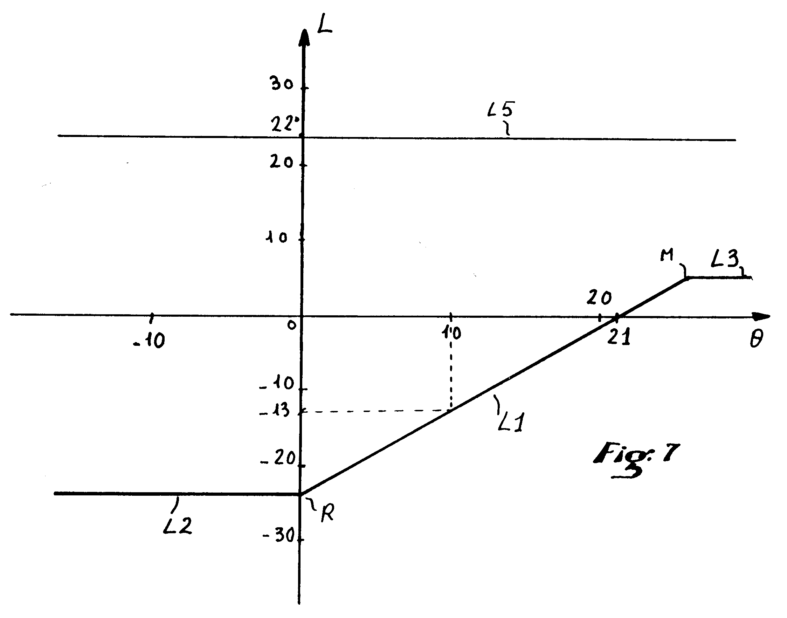

Sur la figure 6, on a représenté, sous forme de schéma synoptique, un exemple de réalisation du dispositif de limitation 31. Celui-ci comprend un générateur de fonction 43, par exemple une mémoire contenant une table de valeurs, qui à toute valeur de l'assiette réelle $\theta$ fait correspondre une valeur d'une fonction limite L, ainsi qu'un additionneur 44 et un comparateur 45. L'additionneur 44 forme la somme $\theta$ + L de la valeur $\theta$ et de la valeur limite correspondante L, tandis que le comparateur 45 compare la somme $\theta$ + L et le signal SW15. Ce comparateur 45 adresse sur la sortie 32 un signal de commande d'assiette SW15L qui est soit le signal $\theta$ + L, si SW15 est supérieur à $\theta$ + L, soit le signal SW15, si $\theta$ + L est supérieur à SW15.

On voit que le comparateur 45 peut être constitué par un voteur, tel que ceux portant les références 12 à 15, recevant un signal de polarisation (comme le signal de polarisation P1) laissant passer le plus petit des signaux SW15 ou θ + L.

Sur la figure 7, on a représenté, en fonction de l'assiette réelle θ (en degrés), un exemple de la variation de la fonction L (également en degrés). Sur cette figure, les valeurs de L correspondant respectivement au cabrage et au piqué sont respectivement portées sur les parties négative et positive de l'axe des ordonnées. La fonction L représentée sur la figure 7, comporte, du côté des assiettes à cabrer, une portion rectiligne inclinée L1, reliée à chacune de ces extrémités à une portion rectiligne L2 ou L3, parallèle à l'axe des abscisses. Par exemple, la portion L1 coupe l'axe des abscisses pour une valeur de θ égale à 21° et est raccordée aux portions L2 et L3, respectivement aux points R et M. Le point R a par exemple pour coordonnées θ = 0 et L = -24 ; de même le point M a par exemple pour coordonnées θ = 26 et L = +6.

Ainsi, par exemple si l'avion 2 présente une assiette à cabrer θ = +10°, l'ordre à cabrer autorisé par le générateur 43 est égal à θc = θ -(-13°), de sorte que l'assiette maximale commandée sera au plus de 23° à θ = 10°. Si le signal SW15 apparaissant à la sortie 15.4 du voteur 15 a une amplitude inférieure à -13°, l'ordre SW15L sera égal à -13°. En revanche si le signal SW15 a une amplitude supérieure à -13°, il sera transmis par le dispositif de limitation 31 et SW15L sera constituée par SW15. De même, on voit que si θ = +15°, l'ordre d'assiette demandée à cabrer ne pourra dépasser 22°.

Si l'assiette à cabrer de l'avion est égale à 21°, cette valeur ne pourra pas être dépassée, c'est-à-dire que toute demande supplémentaire à cabrer du signal SW15 ne sera pas prise en compte. De plus, si l'assiette à cabrer est, en valeur absolue, supérieure à 21°, l'avion sera commandé à piquer.

## Revendications

1. Système de référence de vitesse (11) pour le pilotage d'un aéronef (2), délivrant au directeur de vol (35) et/ou au pilote automatique (34) des informations de pilotage en tangage, notamment pendant les phases de décollage et de remise des gaz, ledit système (11) comportant un voteur (12) recevant à ses entrées (12.1, 12.2, 12.3) des signaux électriques respectivement représentatifs :

. d'une première différence entre une vitesse désirée affichée par le pilote et la vitesse aérodynamique réelle de l'aéronef ;

. d'une seconde différence entre l'assiette longitudinale réelle dudit aéronef et une assiette longitudinale de consigne ; et

. d'une troisième différence entre la vitesse verticale baro-inertielle réelle dudit aéronef et une vitesse verticale plancher,

caractérisé en ce qu'il comporte :

– des premiers moyens de vote (14) recevant à leurs entrées (14.1, 14.2, 14.3) le signal de sortie dudit voteur (12) et le signal représentatif de ladite troisième différence et délivrant à leur sortie (14.4) celui de leurs deux signaux d'entrée qui est le plus petit ; et

– des seconds moyens de vote (15) recevant à leurs entrées (15.1, 15.2, 15.3) le signal de sortie desdits premiers moyens de vote (14) et le signal représentatif d'une quatrième différence entre une vitesse aérodynamique plancher et ladite vitesse aérodynamique réelle, lesdits seconds moyens de vote (15) délivrant à leur sortie (15.4) celui de leurs deux signaux d'entrée qui est le plus grand.

2. Système de référence de vitesse selon la revendication 1,

caractérisé en ce que lesdits premiers moyens de vote (14) présentent une structure identique à celle dudit voteur (12), deux de leurs entrées (14.1, 14.2) recevant respectivement le signal de sortie dudit voteur (12) et ladite troisième différence, tandis que sur leur troisième entrée (14.3) est appliqué un premier signal de polarisation (P1) dont l'amplitude et/ou le signe sont choisis pour qu'il soit plus petit que la plus petite valeur susceptible d'être prise par ledit signal de sortie du voteur et par ladite troisième différence.

3. Système de référence de vitesse selon la revendication 1,

caractérisé en ce que lesdits seconds moyens de vote (15) présentent une structure identique à celle du voteur (12), deux de leurs entrées (15.1, 15.3) recevant respectivement le signal de sortie desdits premiers moyens de vote (14) et ladite quatrième différence, tandis que sur leur troisième entrée (15.2) est appliqué un second signal de polarisation (P2) dont l'amplitude et/ou le signe sont choisis pour qu'il soit plus grand que la plus grande valeur susceptible d'être prise par le signal de sortie desdits premiers moyens de vote et par ladite quatrième différence.

4. Système de référence de vitesse selon la revendication 1,

caractérisé en ce qu'il comporte des moyens (31) de limitation d'ordre à cabrer, disposés en aval desdits seconds moyens de vote (15).

5. Système de référence de vitesse selon la revendication 4,

caractérisé en ce que l'action de limitation desdits moyens de limitation (31) est d'autant plus faible en valeur absolue que l'assiette à cabrer réelle de l'aéronef est plus grande.

6. Système de référence de vitesse selon l'une des revendications 4 ou 5,

caractérisé en ce que, au-delà d'un premier seuil haut d'assiette à cabrer réelle de l'aéronef, lesdits moyens de limitation (31) délivrent un ordre à piquer, afin de réaliser à la limite un pilotage de l'assiette maximale.

7. Système de référence de vitesse selon la revendication 6,
caractérisé en ce que, entre ledit premier seuil haut et un second seuil haut d'assiette à cabrer réelle, supérieur en valeur absolue audit premier seuil, l'ordre à piquer est fonction de ladite assiette, tandis qu'au delà dudit second seuil haut, l'ordre à piquer est indépendant de la valeur de ladite assiette à cabrer réelle.

8. Système de référence de vitesse selon l'une quelconque des revendications 4 à 7,
caractérisé en ce que, au-delà d'un seuil bas d'assiette à cabrer réelle de l'aéronef, lesdits moyens de limitation (31) délivrent un ordre à cabrer indépendant de la valeur de ladite assiette.

9. Système de référence de vitesse selon l'une quelconque des revendications 4 à 8,
caractérisé en ce que lesdits moyens de limitation (31) limitent de plus la valeur de l'assiette à piquer réelle.

10. Système de référence de vitesse selon l'une quelconque des revendications 1 à 9,
caractérisé en ce qu'il comporte un second voteur (13) recevant à ses entrées (13.1, 13.2 et 13.3) respectivement un signal représentatif de ladite vitesse désirée affichée par le pilote et des signaux représentatifs respectivement d'une valeur de consigne minimale et d'une valeur de consigne minimale pour ladite vitesse désirée affichée, la sortie (13.4) dudit second voteur (13) étant reliée à un soustracteur (16) recevant par ailleurs un signal représentatif de ladite vitesse aérodynamique réelle, la sortie dudit soustracteur (16) étant reliée à l'entrée dudit voteur (12) recevant ladite première différence.

11. Utilisation d'un système de référence de vitesse (11) selon l'une quelconque des revendications 1 à 10, pour le pilotage en tangage d'un aéronef pendant les phases de décollage et de remise des gaz,
caractérisée en ce que la sortie (32) dudit système (11) est reliée à un horizon directeur de vol (35) et/ou à un pilote automatique, afin de commander la gouverne de profondeur (38) dudit aéronef en accord avec le signal (SW15) délivré par ledit système de référence de vitesse (11) et éventuellement limité par lesdits moyens de limitation (31).

**Patentansprüche**

1. Geschwindigkeitsbezugssystem (11) für die Steuerung eines Flugzeugs (2), welches der Flugsteuerung (35) und/oder dem automatischen Piloten (34) Steuerinformationen über Nickschwingungen liefert, insbesondere während der Start- und Landephasen, wobei dieses System (11) eine Auswahlschaltung (12) aufweist, die an ihren Eingängen (12.1, 12.2, 12.3) elektrische Signale empfängt entsprechend jeweils:
. einer ersten Differenz zwischen einer gewünschten, an der Steuerung angezeigten Geschwindigkeit und der tatsächlichen aerodynamischen Geschwindigkeit des Flugzeugs;
. einer zweiten Differenz zwischen der tatsächlichen Längstrimmung des Flugzeugs und einer eingestellten Längstrimmung; und
. einer dritten Differenz zwischen der tatsächlichen baro-inertiellen Vertikalgeschwindigkeit des Flugzeugs und einer Mindestvertikalgeschwindigkeit,
dadurch gekennzeichnet, daß es aufweist:
– erste Auswahlmittel (14), die an ihren Eingängen (14.1, 14.2, 14.3) das Ausgangssignal der Auswahlschaltumg (12) und das der besagten dritten Differenz entsprechende Signal empfangen und die an ihrem Ausgang (14.4) dasjenige ihrer beiden Eingangssignale abgeben, welches das kleinere ist; und
– zweite Auswahlmittel (15), die an ihren Eingängen (15.1, 15.2, 15.3) das Ausgangssignal der ersten Auswahlmittel (14) und das einer vierten Differenz zwischen einer aerodynamischen Mindestgeschwindigkeit und der tatsächlichen aerodynamischen Geschwindigkeit entsprechende Signal empfangen und die an ihrem Ausgang (15.4) dasjenige ihrer beiden Eingangssignale abgeben, welches das größere ist.

2. Geschwindigkeitsbezugssystem nach Anspruch 1, dadurch gekennzeichnet, daß die ersten Auswahlmittel (14) einen zur Auswahlschaltung (12) identischen Aufbau aufweisen, wobei zwei ihrer Eingänge (14.1, 14.2) das Ausgangssignal der Auswahlschaltung (12) bzw. der besagten dritten Differenz empfangen, während an ihrem dritten Eingang (14.3) ein erstes Polarisationssignal (P1) anliegt, dessen Amplitude und/oder Vorzeichen so gewählt ist, daß es kleiner ist als der kleinste Wert, den das Ausgangssignal der Auswahlschaltung und die besagte dritte Differenz einnehmen können.

3. Geschwindigkeitsbezugssystem nach Anspruch 1, dadurch gekennzeichnet, daß die zweiten Auswahlmittel (15) einen zur Auswahlschaltung (12) identischen Aufbau aufweisen, wobei zwei ihrer Eingänge (15.1, 15.3) das Ausgangssignal der ersten Auswahlmittel (14) bzw. der besagten vierten Differenz empfangen, während an ihrem dritten Eingang (15.2) ein zweites Polarisationssignal (P2) anliegt, dessen Amplitude und/oder Vorzeichen so gewählt ist, daß es größer ist als der größte Wert, den das Ausgangssignal der ersten Auswahlmittel und die besagte vierte Differenz einnehmen können.

4. Geschwindigkeitsbezugssystem nach Anspruch 1, dadurch gekennzeichnet, daß es Mittel (31) zur Begrenzung des Hochziehgrads aufweist, die hinter den zweiten Auswahlmitteln (15) angeordnet sind.

5. Geschwindigkeitsbezugssystem nach Anspruch 4, dadurch gekennzeichnet, daß die Betätigung der Mittel (31) zur Begrenzung im Absolutwert um so schwächer ist, je größer die tatsächliche Hochziehtrimmung des Flugzeugs ist.

6. Geschwindigkeitsbezugssystem nach einem der Ansprüche 4 oder 5,
dadurch gekennzeichnet, daß oberhalb einer ersten oberen Schwelle für die tatsächliche Hochziehtrimmung des Flugzeugs die Mittel (31) zur Begrenzung eine Anweisung zum Tiefergehen liefern, um eine Steuerung an der Grenze der maximalen Trimmung zu realisieren.

7. Geschwindigkeitsbezugssystem nach Anspruch 6, dadurch gekennzeichnet,
daß zwischen der ersten oberen Schwelle und einer zweiten oberen Schwelle für die tatsächliche Hochzietrimmung des Flugzeuges, die im Absolutwert größer als die erste Schwelle ist, die Anweisung zum Tiefergehen eine Funktion der besagten Trimmung ist, während oberhalb der zweiten oberen Schwelle die Anweisung zum Tiefergehen unabhängig vom Wert der tatsächlichen Hochziehtrimmung ist.

8. Geschwindigkeitsbezugssystem nach einem der Ansprüche 4 bis 7, dadurch gekennzeichnet,
daß oberhalb einer unteren Schwelle für die tatsächliche Hochziehtrimmung des Flugzeugs die Mittel (31) zur Begrenzung eine Anweisung zum Hochziehen liefern, unabhängig von dem Wert der Trimmung.

9. Geschwindigkeitsbezugssystem nach einem der Ansprüche 4 bis 8, dadurch gekennzeichnet,
daß die Mittel (31) zur Begrenzung weiterhin den Wert der tatsächlichen Tiefergehtrimmung begrenzen.

10. Geschwindigkeitsbezugssystem nach einem der Ansprüche 1 bis 9, dadurch gekennzeichnet,
daß es eine zweite Auswahlschaltung (13) aufweist, die an ihren Eingängen (13.1, 13.2, 13.3) Signale entsprechend der gewünschten, von der Flugsteuerung angezeigten Geschwindigkeit und Signale entsprechend einem maximalen und einem minimalen Sollwert für die gewünschte, angezeigte Geschwindigkeit empfangen, wobei der Ausgang (13.4) der zweiten Auswahlschaltung (13) mit einem Subtrahierglied (16) verbunden ist, welches zusätzlich ein Signal entsprechend der tatsächlichen aerodynamischen Geschwindigkeit empfängt, und wobei der Ausgang des Subtrahiergliedes (16) mit dem Eingang der die gesagte erste Differenz empfangenden Auswahlschaltung (12) verbunden ist.

11. Verwendung eines Geschwindigkeitsbezugssystems (11) nach einem der Ansprüche 1 bis 10 für die Steuerung von Nickschwingungen eines Flugzeugs (2) während der Start- und Landephasen, dadurch gekennzeichnet, dass der Ausgang (32) des Systems (11) mit einem Horizontdetektor (35) und-/oder einem automatischen Piloten verbunden ist, um das Höhenruder (38) des Flugzeugs entsprechend dem vom Geschwindigkeitsbezugssystem (11) gelieferten und eventuell von den Mitteln (31) zur Begrenzung begrenzten Signal (SW15) zu steuern.

## Claims

1. Speed reference system (11) for the piloting of an aircraft (2), adapted to deliver to the flight director (35) and/or to the automatic pilot (34) information on piloting in pitch, particularly during the phases of take-off and go-around, said system (11) comprising a voter (12) receiving at its inputs (12.1, 12.2, 12.3) electrical signals respectively representative

. of a first difference between a desired speed displayed by the pilot and the real aerodynamic speed of the aircraft,

. of a second difference between the real pitch attitude of said aircraft and a reference pitch attitude, and

. of a third difference between the real baro-inertial vertical speed of said aircraft and a vertical speed limit,
characterized in that it comprises :
– first voting means (14) receiving at their inputs (14.1, 14.2, 14.3) the output signal of said voter (12) and the signal representative of said third difference and delivering at their output (14.4) that of their two input signals which is the smaller ; and
– second voting means (15) receiving at the inputs (15.1, 15.2, 15.3) the output signal of said first voting means (14) and the signal representative of a fourth difference between an aerodynamic speed limit and said real aerodynamic speed, said second voting means (15) delivering at their output (15.4) that of their two input signals which is the greater.

2. Speed reference system according to claim 1, characterized in that said first voting means (14) present a structure identical to that of said voter (12), two of their inputs (14.1, 14.2) respectively receiving the output signal of said voter (12) and said third difference, whilst, on their third input (14.3) is applied a first polarization signal (P1) whose amplitude and/or sign are selected so that it is smaller than the smallest value likely to be taken by said output signal of the voter and by said third difference.

3. Speed reference system according to claim 1, characterized in that said second voting means (15) present a structure identical to that of the voter (12), two of their inputs (15.1, 15.3) receiving respectively the output signal of said first voting means (14) and said fourth difference, whilst, on their third input (15.2) is applied a second polarization signal (P2) whose amplitude and/or sign are selected so that it is larger than the largest value likely to be taken by the output signal of said first voting means and by said fourth difference.

4. Speed reference system according to claim 1,

characterized in that it comprises means (31) for limitation of order to pull up, disposed downstream of said second voting means (15).

5. Speed reference system according to claim 4, characterized in that the action of limitation of said limitation means (31) is all the weaker in absolute value as the real attitude of the aircraft to be pulled up is greater.

6. Speed reference system according to one of claims 4 or 5, characterized in that, beyond a first high threshold of real attitude of the aircraft to pull up, said limitation means (31) deliver an order to dive, in order to effect at the limit a piloting of the maximum attitude.

7. Speed reference system according to claim 6, characterized in that, between said first high threshold and a second high threshold of real attitude to pull up, greater in absolute value than said first threshold, the order to dive is a function of said attitude, whilst, beyond said second high threshold, the order to dive is independent of the value of said real attitude to pull up.

8. Speed reference system according to any one of claims 4 to 7, characterized in that, beyond a low threshold of real attitude of the aircraft to pull up, said limitation means (31) deliver an order to pull up independent of the value of said attitude.

9. Speed reference system according to any one of claims 4 to 8, characterized in that said limitation means (31) limit, in addition, the value of the real attitude to dive.

10. Speed reference system according to any one of claims 1 to 9, characterized in that it comprises a second voter (13) receiving at its inputs (13.1, 13.2 and 13.3) respectively a signal representative of said desired speed displayed by the pilot and signals representative respectively of a maximum reference value and of a minimum reference value for said displayed desired speed, the output (13.4) of said second voter (13) being connected to a subtractor (16) receiving, furthermore, a signal representative of said real aerodynamic speed, the output of said subtractor (16) being connected to the input of said voter (12) receiving said first difference.

11. Use of a speed reference system (11) according to any one of claims 1 to 10 for piloting an aircraft in pitch during the phases of take-off and go-around, characterized in that the output (32) of said system (11) is connected to an attitude director indicator (35) and/or to an automatic pilot, in order to control the elevator (38) of said aircraft in accordance with the signal (SW15) delivered by said speed reference system (11) and possibly limited by said limitation means (31).

Fig. 1

EP 0 322 282 B1

## Fig. 2a

## Fig. 2b

## Fig. 2c

Fig. 3a

Fig. 3b

Fig. 3c

16

*Fig:4*

EP 0 322 282 B1

## Fig. 5

## Fig. 6

Fig. 7

EP 0 322 282 B1